(19) Europäisches Patentamt
European Patent Office
Office européen des brevets

(11) **EP 2 935 693 B1**

(12) **EUROPEAN PATENT SPECIFICATION**

(45) Date of publication and mention
of the grant of the patent:
**07.02.2018 Bulletin 2018/06**

(51) Int Cl.:
*D21G 9/00* *(2006.01)*    *G05D 5/03* *(2006.01)*
*G05B 5/01* *(2006.01)*    *G05B 13/04* *(2006.01)*
*G05B 17/02* *(2006.01)*

(21) Application number: **12890158.4**

(22) Date of filing: **21.12.2012**

(86) International application number:
**PCT/FI2012/051291**

(87) International publication number:
**WO 2014/096507 (26.06.2014 Gazette 2014/26)**

(54) **APPARATUS AND METHOD FOR CONTROLLING A PROPERTY OF AN OBJECT**

VORRICHTUNG UND VERFAHREN ZUR REGELUNG EINER EIGENSCHAFT EINES OBJEKTS

DISPOSITIF ET PROCÉDÉ DE CONTRÔLE D'UNE PROPRIÉTÉ D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.10.2015 Bulletin 2015/44**

(73) Proprietor: **VALMET AUTOMATION OY
02150 Espoo (FI)**

(72) Inventors:
• **FU, Calvin**
**FI-02150 Espoo (FI)**
• **OLLANKETO, Jarmo**
**FI-02150 Espoo (FI)**
• **KIVIMÄKI, Mira**
**FI-02150 Espoo (FI)**

(74) Representative: **Kolster Oy Ab
(Salmisaarenaukio 1)
P.O. Box 204
00181 Helsinki (FI)**

(56) References cited:
US-A1- 2004 260 421    US-A1- 2004 260 421
US-A1- 2008 039 968    US-A1- 2010 043 993
US-A1- 2010 043 993    US-A1- 2010 179 791
US-A1- 2011 295 390    US-B1- 6 360 131

US-B1- 6 553 270    US-B1- 6 584 703
US-B1- 6 807 510

• Jing Li: "Adaptive Control of Sheet Caliper on
Paper Machines", A THESIS SUBMITTED IN
PARTIAL FULFILLMENT OF THE
REQUIREMENTS FOR THE DEGREE OF master
of applied science, 1 December 1994
(1994-12-01), XP055206828, Retrieved from the
Internet:
URL:https://circle.ubc.ca/bitstream/id/103
43/ubc_1995-0054.pdf [retrieved on 2015-08-07]
• Frank J Christophersen: "Optimal control and
analysis for constrained piecewise affine
systems", , 1 January 2006 (2006-01-01),
XP055206830, DOI: 10.3929/ethz-a-005280996
Retrieved from the Internet:
URL:http://dx.doi.org/10.3929/ethz-a-00528 0996
[retrieved on 2015-12-02]
• LI, JING.: 'Adaptive control of sheet caliper on
paper machines''.' RETROSPECTIVE THESES
AND DISSERTATIONS, 1919-2007 December
1994, XP055206828 Retrieved from the Internet:
<URL:http://circle.ubc.ca/bitstream/handle/
2429/3494/ubc-1995-0054.pdf> [retrieved on
2013-09-23]
• CHRISTOPHERSEN, FRANK J.: 'Optimal Control
and Analysis for Constrained Piecewise Affine
Systems''.' DISSERTATION ETH ZURICH NO.
16807 2006, ZURICH, XP055206830 Retrieved
from the Internet:
<URL:http://e-collection.library.ethz.ch/es
erv/eth:29115/eth-29115-02.pdf> [retrieved on
2013-09-13]

EP 2 935 693 B1

- **VANANTWERP, JG ET AL.: 'Cross-directional control of sheet and film processes''.' AUTOMATICA vol. 43, no. 2, February 2007, pages 191 - 211, XP005731214**

**Description**

**Field**

The invention relates to a controller and method for controlling property of an object.

**Background**

The following description of background art may include insights, discoveries, understandings or disclosures, or associations together with disclosures not known to the relevant art prior to the present invention but provided by the invention. Some of such contributions of the invention may be specifically pointed out below, whereas other such contributions of the invention will be apparent from their context.

Process systems such as paper mills use a predictive control of a multiplicity of actuators. When the processes are initiated for the first time or after a stop such as a sheet break in a paper production, the process is controlled by a steady state control.

Document Jing Li: "Adaptive Control of Sheet Caliper on Paper Machines", a thesis submitted in partial fulfillment of the requirements for the degree of master of applied science, 1 December 1994 (1994-12-01), XP055206828, presents a caliper control in a calendering process in order to obtain even thickness of the sheet.

Patent document US2010043993 presents a method and a system for controlling the manufacturing or finishing process of a fiber web.

Patent document US2004260421 presents a dynamic on-line optimization of production processes.

However, the steady state control cannot regulate the actuators properly or at all since the process is in a transient period. The delay in the proper control often continues for tens of minutes. To have the undesired transient period as short as possible, the process control typically makes aggressive control actions against process output variation on the basis of the steady state model which often lead to overacting. The aggressive control may cause the process state oscillate such that the process reaches rather quickly but momentarily a setpoint after which the process slides again away from the target range. Thus with or without the aggressive control, a result is a long off-specification state of the process under the steady state control during a transition period.

Hence, there is a need for a better process control.

**Brief description**

An object of the invention is to provide an improved solution for control.

According to an aspect of the present invention, there is provided an apparatus of claim 1.

According to another aspect of the present invention, there is provided an apparatus of claim 2.

According to another aspect of the present invention, there is provided an apparatus of claim 10.

According to another aspect of the present invention, there is provided a method of claim 14.

According to another aspect of the present invention, there is provided a method of claim 15.

Although the various aspects, embodiments and features of the invention are recited independently, it should be appreciated that all combinations of the various aspects, embodiments and features of the invention are possible and within the scope of the present invention as claimed.

The present solution provides advantages. The temporal and spatial changes which may be considered disturbance can be taken into account in the control and thus avoiding problems associated with the steady state control.

**List of drawings**

Embodiments of the present invention are described below, by way of example only, with reference to the accompanying drawings, in which

Figure 1 illustrates an example of a measurement and control configuration of a sheet manufacturing process;
Figure 2 illustrates an example of measuring and controlling the sheet;
Figure 3A illustrates an example of behavior of a sheet variation quality trajectory;
Figure 3B illustrates an example of an effect of a duration of a break on the predetermined model related to disturbance caused by the break;
Figure 4 illustrates an example of measured caliper profile;
Figure 5 illustrates an example of present error in caliper profile;
Figure 6 illustrates an example of predicted error in caliper profile;
Figure 7 illustrates an example of change in error profile;

Figure 8 illustrates an example of predicted future caliper profile change;
Figure 9 illustrates an example of control action profile;
Figure 10 illustrates an example of a load test using a 1.5 % higher load in the middle;
Figure 11 illustrates an example of a load test using a decreased load the tending side;
Figure 12 illustrates an example of a load test using an increased load at both sides of the calendar;
Figure 13 illustrates an example of a flow chart of a method using a model of a disturbance; and
Figure 14 illustrates an example of a flow chart of a method using a model of time dependent disturbance during a transient period.

**Description of embodiments**

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

In this application steady state control may be considered such that a behavior of a process change from a given control action will continue to be within the same expected range from a model as it has done up to the present state. The steady state of a process is usually reached after a delay from an initiation of the process. The delay represents a transient period and the delay may also be called as a warm-up period or cooling down period. The duration of the transient time may be different in different processes. During the transient period one or more controlled variables cannot be controlled or cannot be properly controlled using control actions performed by the steady state control i.e. a process output doesn't follow a process input in a manner characteristic to the steady state control.

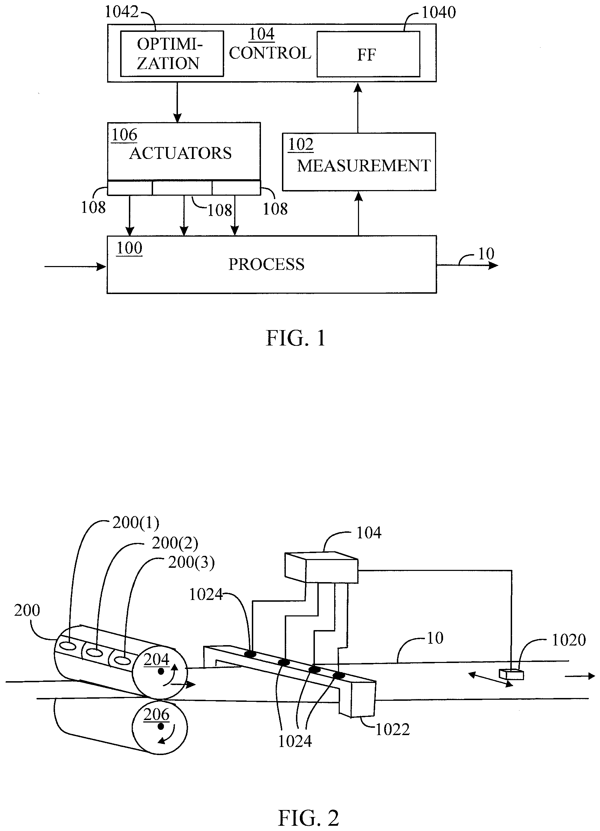

Figure 1 shows an example of a measurement and control configuration of a sheet 10 manufacturing process. The sheet 10 may be paper, cardboard, metal, plastic or the like. In an embodiment, the process 100 may refer to a paper machine or to a section of it. A measurement arrangement 102 measures the process 100 and provides a predictive controller 104 with controlled variable data about at least one property of the sheet 10 in the process 100. The at least one property may be caliper, basis weight, moisture, ash content, color, coat weight (for coated paper), thickness of the sheet or the like. The caliper refers to thickness of paper or cardboard. The measurement of the property of a sheet may be direct or indirect such that the sensor of the measurement arrangement 102 outputs a value of the property, or the value of the property is computed on the basis of measurement values and potentially other information. The measurement may be performed using optical radiation, microwave radiation, mechanical instrument or the like and the measurement *per se* can be considered known to a person skilled in the art. The manner according to which the measurement as such is accomplished doesn't limit implementation of the control.

At least one actuator 108 of the actuator arrangement 106 regulates directly or indirectly the at least one property which is measured by the measurement arrangement 102. The actuator arrangement 106 regulates at least one property of the sheet. Here the measurement 102 refers to an array of measurement points across the direction of sheet width, with typically up to 2000 measurement points; the actuator 106 refers to an array of control action locations across the direction of sheet width, with typically up to 300 control action locations. There could be several of such measurements (for different sheet properties) and actuators in the control application. That is why the manipulated variable and the controlled variable may comprise one or more element in a vector or matrix form.

The predictive controller 104 has a predetermined model based on time dependent disturbance available during a transient period of the manufacturing process. The disturbance can be associated with the actuator arrangement. Thus, the disturbance may be considered to be at least partly caused by the actuator arrangement such that one or more of its properties is out of a steady state range. On the other hand, the disturbance may be considered as a process disturbance where the process refers to the environment of the actuator arrangement. Both concepts of the disturbance lead to the fact that the controlled variable drifts out from a desired range which is controllable by the steady state control. The controller 104 then forms a manipulated variable for the actuator arrangement 106 in response to the disturbance on the basis of the model. In other words, the controller 104 forms a command on the basis of the model of the disturbance and feeds the command to the actuator arrangement 106. Then the actuator arrangement 106 regulates the process on the basis of the command.

The predictive controller 104 may form data associated with future controlled variable on the basis of an estimate of a time dependent disturbance in a transient period. That is, the controller 104 has a feed forward controller part 1040 which may form data associated with at least one future controlled variable as a time dependent function of a change in the measured manipulated variable. The time dependent function estimates and compensates for the time dependent disturbance. The function may be understood as a model which the feed forward controller part 1040 has for performing the estimation of at least one actuator 108 of the actuator arrangement 106 and the model is used for forming of at least one manipulated variable. The function or model may be mathematically operable and it may have been made beforehand by a user.

Alternatively, the model may have been learned and/or it may continuously be learned by the feed forward controller part 1040 on the basis of the data it has and/or it receives and stores in a databank of its memory. A learning controller may be based on a neural network, for example. Data about values and/or changes of controlled values and/or manipulated variable from a plurality transient periods of the same actuator arrangement in the same process may be used to make the function more accurate time after time.

The data the feed forward part 1040 may receive is the measured controlled variables at different moments. The data the feed forward controller 1040 has may also comprise general information about the actuator arrangement 106. In this way, the disturbance may be accounted for before the feedback control takes actions in response to it and before it has time to freely affect the process 100. Thus the function efficiently compensates for the time dependent disturbance during the transient period.

The time dependent disturbance may be related to an operational break of the actuator arrangement 106. That may take place in conjunction with a sheet break, for example. When the shutdown happens, the actuator arrangement 106 regulating the property of the sheet 10 is switched off and/or driven out of its normal regulating state. The process 100 may also be fully or partly shut down. The change in a state of the actuator arrangement 106 may be mechanical, thermal and/or electrical, for example. When the process 100 is started up again, the normal state of the actuator arrangement 106 is also returned. However, the actuator arrangement 106 has a delay to fully recover from the change of state caused by the operational break and hence its behavior to regulate the process 100 is different and changing along with the time till a steady state process is reached. This delay may be called transient period.

The function associated with or representing the time dependent disturbance may be available for the feed forward controller part 1040. That the function associated with the time dependent disturbance is available may mean that function is stored in a memory or the feed forward controller part 1040 may form the function on the basis of information on the actuator arrangement 106. The data associated with the future controlled variable may comprise at least one future controlled variable or at least one change of the future controlled variable. In addition to the function, the feed forward controller part 1040 may form the data associated with the future controlled variable on the basis of the measured controlled variable data. Furthermore, the feed forward controller part 1040 may use at least one formed manipulated variable to form the data about the future controlled variable. Here, the manipulated variable and the controlled variable may be expressed as at least one vector or matrix with one or more elements.

In an embodiment, the feed forward controller part 1040 may use a history of controlled variable data for the function representing time dependent disturbance. The history of the controlled variable data may refer to the present transient period and/or to at least one previous transient period. In this manner, information can be collected on relationship between the change in manipulated variable and the resulting controlled variable. The relationship, in turn, gives information for the function, such as a type of the function, value of each coefficient. Furthermore, the function coefficient may be associated with a time constant starting from the time the actuator 106 was switched on after the process resumes, and this time constant may be estimated from previous process start behavior. Then the optimizing controller part 1042 of the predictive controller 104 forms a present manipulated variable for the actuator arrangement 106 on the basis of the data associated with the future controlled variable in order to regulate the process 100.

Figure 2 shows an example of a measuring and controlling configuration associated with caliper, surface property or the like of a paper sheet. In manufacturing or processing of a continuous sheet, the quality of the sheet is usually measured across the web by measurement arrangement 1020, 1022 performing cross-directional (CD) measurements. Typical variables measured in CD measurements are moisture content, caliper and basis weight. Measurement results are compared with set values and an error profile is formed to show the difference between the measurement results and the set values. A process in a state matching the set values is known to produce a sheet of a desired quality and, thus, the process should be kept in a state matching the set values as exactly as possible. By means of the error profile and a nominal process model, a controller 104 gives a control command to actuator arrangement 200, 204, 206, which alter the process according to the command to maintain good quality of the paper being made.

The caliper profile of the sheet 10 may be controlled in post-drying section of a paper machine. In an embodiment, the measurement arrangement 102 may provide the predictive controller 104 with data associated with caliper of the sheet 10. The predictive controller 104 may estimate at least one future caliper profile or at least one change of the future caliper profile as a time dependent function which compensates for the time dependent disturbance associated with a profiler 200 in a transient period. In this example, the profiler 200 is a caliper profiler. The predictive controller 104 may form a manipulated variable for the profiler 200 on the basis of the at least one estimated future caliper profile in order to regulate the process 100. The time dependent disturbance may relate to the process regulated by the caliper profile or the time dependent disturbance may relate to the caliper profile itself. Correspondingly, the time dependent disturbance may be understood to be caused by the process regulated by the caliper profile or the time dependent disturbance may be understood to be caused by the caliper profile itself.

In an embodiment, the measurement arrangement 102 may provide the predictive controller 104 with data about at least one surface property of the sheet 10. The predictive controller 104 may estimate at least one future sheet property or at least one change of the future sheet property as a time dependent function which compensates the time dependent actuator disturbance associated with the profiler 200 during a transient period. In this example, the profiler 200 includes also a surface profiler (surface profiler as such is not shown in Figures). The predictive controller 104 may form a manipulated variable for the profiler 200 on the basis of the at least one future surface property. In an embodiment, the sheet property includes gloss and caliper but is not limited to these.

The implementation of the time dependent function may be a temporally varying coefficient multiplied by change of the present surface property or other paper quality property like caliper. That changing coefficient has an initial value and decay as a function of time. The function may be of the first order. Obviously the time dependent constant may be approximated to follow the cooling (or heating) process variation and the initial value may be a tuning parameter. The initial value may be tuned bigger or smaller based on observed recovery trend.

Other possibly measured properties may be a moisture content, basis weight, ash content, carbonate content, brightness, smoothness, hardness or temperature of the sheet 10.

In an embodiment, the measurement arrangement 102 may comprise a scanning sensor 1020 which traverses over the sheet 10 (two-headed array illustrates the movement). The scanning sensor 1020 may gather data about the sheet 10 having both machine direction and cross direction information mixed together. However, the two pieces of information may be separated from each other by a suitable signal processing in the controller 104.

In an embodiment, the measurement arrangement 102 may comprise an array measuring unit 1022 comprising at least two measuring parts 1024 successively in a direction transverse relative to the machine direction (the arrow over the sheet 10 shows the movement of the sheet 10 in the machine direction). The measurements of the sheet 10 may be performed one sided or two sided with respect to the sheet 10.

A stack of rotating rollers represented in Figure 2 by two rolls 204, 206 is itself an actuator and may exert pressure onto the sheet 10 which passes between the rolls 204, 206. The higher the pressure the smoother and the thinner the sheet 10 becomes. In an embodiment, the profiler 200 may comprise a plurality of actuator units 202(1), 202(2), 202(3). Figure 2 shows only three actuator units but in reality the number of actuator units may vary from two to hundreds or thousands.

In an embodiment, the actuator units 202(1) to 202(3) may comprise air sources which may blow hot or cold air on the roll 204, for example. If cold air is blown, a circumference of the roll 204 becomes locally shorter and the diameter of the roll at the location affected by the cold air shrinks which, in turn, results in a local pressure drop on the sheet 10. If, on the other hand, hot air is blown against the roll 204, the sheet 10 is locally compressed more intensively.

In an embodiment, the actuator units 202(1) to 202(3) may comprise induction heaters each of which heats one location of the roll 204. The roll 204 may comprise at least one ferrous material. When high frequency electric current is fed in an induction heater it induces local eddy currents in the ferrous material which in turn causes the roll 204 to heat locally. The heating and cooling of the roll 204 changes the pressure on the sheet 10 in a similar manner as discussed in conjunction with the hot and cold air.

A change in pressure on the sheet 10 caused by the calendar 204, 206 has effect on properties of the sheet 10 where the properties may be caliper, gloss, opacity, at least one surface property or the like.

When the actuator arrangement 106 is driven out of a normal regulating state, which may take place during an operational break, and set back in operation, the actuator arrangement 106 may be in a different state than before the operational break. Thus, the profiler 200 may be thermally in a different temperature than before the operational break, for example. The diameter profile of the roll 204 may be different from what is desired at the beginning of the transient period but it actually is not known if it is different or how much it may differ from a desired setpoint. However, typically the roll 204 is too hot or too cool after an operational break.

Similarly, the actuator arrangement 106 comprising the stack rollers (204, 206) may be mechanically in a different position than before the break irrespective of how well the actuator arrangement 106 is attempted to be returned to its original state. The reason for that is that the nip of the rollers is typically opened during the sheet break and it cannot be returned exactly.

Hence, the time dependent disturbance is associated with the actuator arrangement 106 and that is why the disturbance should be taken into account in its own manner to compensate for its time varying effect in the controller 104.

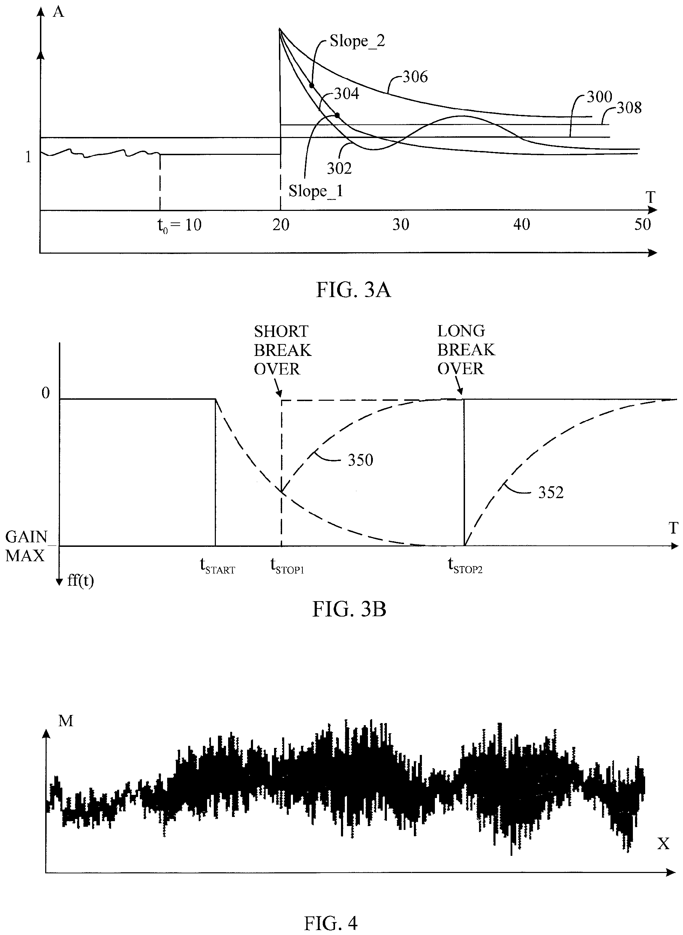

Figure 3A presents an example of a sheet variation quality trajectory behavior with and without the function compensating for the time dependent disturbance. The smaller the value of the variation is the better quality. The vertical axis means amplitude A of the quality variation in an arbitrary scale and the horizontal axis means time T. The operational break is assumed to happen at $t_0$ = 10 min and it lasts for 10 min after which the process is restarted. The decaying curve 306 represents a behavior of the time dependent disturbance. The disturbance may be an increase or a decrease of temperature of the actuator arrangement such as stack rollers after the operational break.

After a break, the sheet quality variation typically jumps to a high value represented by line 306. Alternatively, it may go abruptly down. In general, the quality may have a large deviation from what is desired after a break. The variation can by decomposed to two parts: a static error higher than pre-break variation represented by line 308, which needs a control action to bring the quality back to under the threshold line 300; a transient part represented by the area between line 306 and line 308, which will disappear after a long period without any control action. The size of the variation may be related to the length of the operational break. The temperature may be cooling down or heating up but the behavior is actuator arrangement-specific such that each actuator arrangement in each paper machine may have its own kind of behavior. The dynamic temporal behavior may depend on heat capacity of the calendar, for example. A general model may be difficult or impossible to achieve. The disturbance disappears when the temperature is stabilized to the steady-state level after the transient period. The area between the line 308 and the setpoint is controllable variation which is likely related to the operation change and/or the length of the operational break.

The process has drifted far away from the set point value which in this Figure 3A is at value 1 and even from quality threshold 300. The actuator arrangement is in the transition period for more than ten minutes. The trajectory 302 of the process without disturbance compensation decays quickly towards the set point value but because of oscillation it takes more than 20 minutes before the trajectory 302 fully remains in a range of acceptable quality. The trajectory 304 with the control having disturbance compensation decays in this example slightly more slowly although in general the decay may not differ. However, the trajectory 304 remains in the range of acceptable quality much faster than trajectory 302 i.e. in less than 10 minutes.

In the case, the actuator arrangement is a super calendar there are a plurality of nips to be controlled using the model of temporal disturbance. The more nips there are, the more advantageous it is to use the model of the temporal disturbance.

Examine now the mathematics in a controller 104 which may be based on an MPC (Model Predictive Control) or GPC (General Predictive Control) multivariable control or the like. The controller may be considered as a control arrangement based on automatic data processing of the paper machine, or as a part thereof. The controller may receive digital signals or convert the received analog signals to digital signals. The controller may comprise a microprocessor and memory and process the signal according to a suitable computer program.

As to mathematics related to the control, the steady state control may be expressed as an optimization algorithm (state of art) such that the predicted profile error is minimized subject to a set of actuator constraint related cost functions. That is, the control action $\Delta$u is such that the following cost function J is minimized.

$$J = \sum_{i=h_{min}}^{h_{max}} \left\| \hat{P}_{t+i} - P_{tgt} \right\|^2 + \sum_{i=1}^{M} p_i(u, \Delta u), \qquad (1)$$

where

$u$ is the current actuator profile;
$\Delta u$ is the control action profile;
i is an index i = 1, 2, ... M;
$p_i(u, \Delta u)$ refers to M actuator profile penalty functions. Typical actuator penalty functions are an actuator deviation penalty, an actuator bending penalty and an actuator filtering penalty. It is a specific function (usually first or second order polynomial function) of $u$ and $\Delta u$;
$P_{tgt}$ is the target sheet quality profile.
$\hat{P}_{t+i}$ is the predicted future sheet quality profile using a model and history control actions at time t + i where t is the current time; and
$h_{min}$ and $h_{max}$ are minimum and maximum prediction horizon respectively.

When using feed-forward, the optimization may minimize the following modified cost function:

$$J = \sum_{i=h_{min}}^{h_{max}} \left\| F_{t+i} + \hat{P}_{t+i} - P_{tgt} \right\|^2 + \sum_{i=1}^{M} p_i(u, \Delta u), \qquad (2)$$

where $F_{t+i}$ is the future disturbance effect to be compensated at time t+i.

A steady state control of a predictive controller may be presented for simplicity as:

$$v_m = v_{m-1} + \sum_{j=m-d}^{m-1} \sum_i u_{ij} z_{ij}, \qquad (3)$$

where $v_m$ is a controlled variable (process output), $u_{ij}$ is a value of a manipulated variable (process input), $z_{ij}$ is a coefficient in the steady state model, j is index for time, m is current moment of time, i is index for the variable and d refers to past moments.

Alternatively, the manipulated variable $u_{ij}$ may be replaced by a change of the manipulated variable $\Delta u_{ij}$ such that

$$v_m = v_{m-1} + \sum_{j=m-d}^{m-1} \sum_i \Delta u_{ij} z_{ij}. \qquad (4)$$

A change in a future manipulated variable $\Delta u_f$ may be expressed as

$$\Delta u_f = f(t, \Delta u), \qquad (5)$$

where f means a predetermined time dependent function which compensates for the time dependent disturbance, t means time and $\Delta u$ means at least one present or previous change of the manipulated variable with respect to the future change. The at least one present or previous change of the manipulated variable may be based on already performed actions or actions to be performed now. The time t may be measured from the beginning of transient time i.e. from the moment when the actuator arrangement is initiated for the first time or again after the operational break. The function f may be a linear function, a non-linear elementary function or a non-elementary function. An example of non-linear elementary function is a polynomial function the degree of which is different from 1 and 0. A linear function may be a polynomial function the degree of which is 1. The function f may be ff(t)*$\Delta u$, where ff(t) is a function of time t and sign * means a multiplication operation. The function ff(t) may change dynamically with time and it may be an exponential function $b*e^{kt}$ which may rise or decay depending on the value of constant k and where e means Euler's number (about 2.71828182). The initial value b is a tuning parameter. The exponential function $e^{kt}$ may be approximated. The approximation may be linear such as $e^{kt} \approx (1 + kt)$.

The constant k may be decided by the operator. The constant k may be adaptable such that it changes as more and more information of the behavior the process 100 such as behavior of manipulated variable and controlled variable during the transient periods is collected by the controller 104.

In an embodiment, the manipulated variable may be caliper of the sheet 10 and the future change dPF of the caliper may be expressed as

$$dPF = f(t, dPC), \qquad (6)$$

where dPC is a current or previous change of the caliper. The future change of the caliper dPF may also be written as

$$dPF = ff(t)*dPC, \qquad (7)$$

where the function ff(t) may be an approximation of (a*Slope_2)/(Slope_1), where a is a constant, Slope_2 is a next value of a slope of the caliper variation trajectory and Slope_1 is a previous value of the slope of the caliper variation trajectory of the process 100 (see Figure 3A). The slope may be defined as a value of a derivative of the caliper variation trajectory. The constant may be 2, for example.

Figure 3B shows an example of an effect of a length of a break on the function ff(t). The vertical axis represents a value for the function ff(t) and the horizontal axis is time, both axes being in an arbitrary scale. It is assumed that the break starts at $t_{START}$. A short break may end at $t_{STOP1}$. A long break may end at $t_{STOP2}$. The temporal duration between $t_{START}$ and $t_{STOP1}$ is shorter than that of $t_{START}$ and $t_{STOP2}$. The short break may last for a few minutes for example whereas the long break may last for more than 10 minutes for example. The function ff(t) may be different for a short break than for a long break. Curve 350 represents the function ff(t) for a short break and curve 352 represents the function ff(t) for a long break. Their values may be different. Actually the function ff(t) may be constantly zero for a steady state and the function ff(t) may be GAIN_MAX for a long break, where GAIN_MAX means a maximum value used in the control. For a short break, the function fft(t) may be between zero and GAIN_MAX. The value of the function ff(t) may thus be adaptive and depend on the length of the break.

A future change in a controlled variable $\Delta v$ may now be written as

$$\Delta v = v_{m+1} - v_m = \sum_{j=m-d}^{m-1} \sum_i \Delta u_{ij} z_{ij} + f(t, \Delta u). \qquad (8)$$

Hence, a future controlled variable $v_{m+1}$ may be written as

$$v_{m+1} = v_m + \sum_{j=m-d}^{m-1} \sum_i \Delta u_{ij} z_{ij} + f(t, \Delta u) \tag{9}$$

The result is the same irrespective whether $v_{m+1}$ and $v_m$ are symbols for the actual controlled variable or for errors between a target and the actual controlled variable ($v_e$, $v_{ef}$)

The MPC checks how near or how far the process was, is or will be from a setpoint using a cost function. The cost function for a standard MPC may be given as a 2-norm, but other norms can be used equally well. The cost function q may be expressed as:

$$q = \sum_{j=Min}^{Max} w_{kj} \left( r_{kj} - v_{kj} \right)^2 \tag{10}$$

where

$r_{kj}$     is setpoint trajectory for controlled variable $k$ at time moment $j$

$j$     is index for present and future moments of time from a predetermined minimum (Min) to a predetermine maximum (Max)

$v_{kj}$     is value of controlled variable $k$ at time moment $j$,

$w_{kj}$     is weight factor for error in controlled variable $k$ at time moment $j$.

The error term $(r_{kj} - v_{kj})^2$ is comparable to the absolute value of the difference between the setpoint variable r and the controlled variable v. The setpoint trajectory $r_{kj}$ may be provided by a human operator or by a table of product specifications. The weight factors $w_{kj}$ may define a time window for each controlled variable, and a relative importance of that variable compared to the others at each moment in the window.

In an embodiment, all points of moment j may be in future time points. The controlled variable values $v_{kj}$ at times in the future may be based on a steady state model, and additionally on the function f estimating the time dependent disturbance in the process control during a transient period. The controlled variable may also be based on knowledge of past control actions.

In general, there may also be a cost associated with each manipulated variable, and a cost associated with control action magnitudes, so that the cost function q may more generally be presented as:

$$q = \sum_{j=1}^{n} w_{kj} \left( r_{kj} - v_{kj} \right)^2 + \sum_{j=0}^{m} b_i \left( p_i - u_{ij} \right)^2 + \sum_{j=0}^{m} c_{ij} \Delta u_{ij}^2 \tag{11}$$

where

$p_i$     is minimum cost state for manipulated variable $i$ found by the optimization of q

$\Delta u_{ij}$     is change in manipulated variable $i$ at time moment $j$ and

$b_i$ is a cost multiplier for manipulated variable $i$ and $c_{kj}$ is a weight factor for control action $i$ at time $t_j$.

The change in manipulated variable $\Delta u_i$ is expressed as $\Delta u_i = u_i - u_{i-1}$. There may also be constraints on the manipulated variables, typically of a simple limit type, and there may be an amplitude constraint on the control actions expressed as limitations to the manipulated variable:

$$u_{i,min} \leq u_{ij} \leq u_{i,max}$$

$$\left\| \Delta u_{ij} \right\| \leq \Delta u_{i,max} \tag{12}$$

where $u_{i,min}$ and $u_{i,max}$ are the upper and lower limits for manipulated variable $u_i$, and $\Delta u_{i,max}$ is maximum allowed single change of the manipulated variable. A standard MPC comprises finding a schedule of m + 1 control states $u_{ij}$ from $t_0$ to $t_m$ which minimizes the cost function q

$$\min_{u}\left\{ q \middle| u_{i,\min} \leq u_{ij} \leq u_{i,\max}, \left\| \Delta u_{ij} \right\| \leq \Delta u_{i,\max} \right\} \qquad\qquad (13)$$

in which none of the manipulated variables violate their constraints $\|\Delta u_{ij}\| \leq \Delta u_{i,max}$ and $u_{i,min} \leq u_{ij} \leq u_{i,max}$.

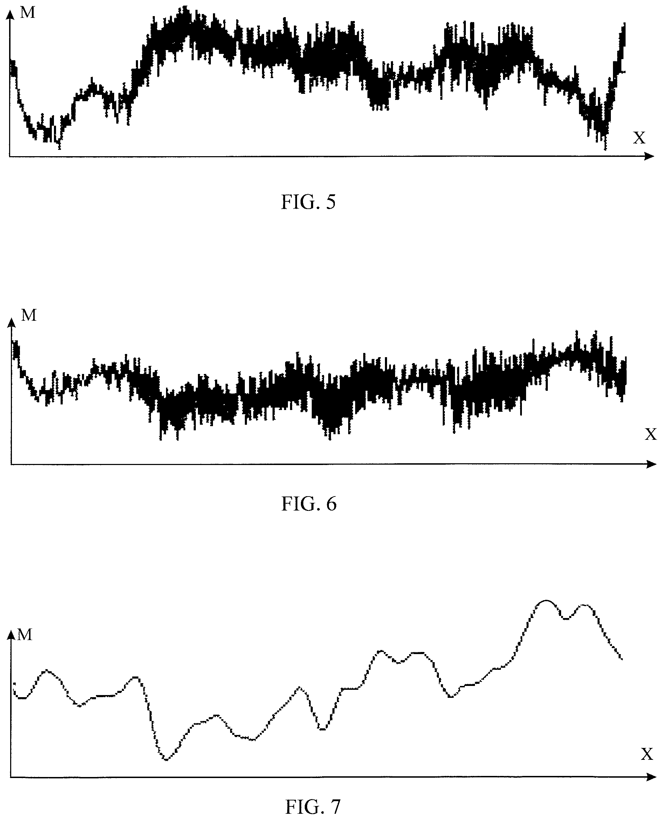

Figure 4 presents an example of a measured caliper profile (manipulated variable u) at a present moment. Figure 5 presents an example of a present error between the measured caliper and a target caliper ($v_e$). Figure 6 presents an example of predicted error at a future moment ($v_{ef}$). Figure 7 presents an example of a feed forward error profile on the basis of equation (7).

In an embodiment shown in Figure 7, the change in error is also filtered such that it is smoother. The filtering may be low-pass filtering, median filtering or averaging filtering, for example. Filtering high frequencies out provides a more aggressive control towards long wavelengths of the caliper profile, for example.

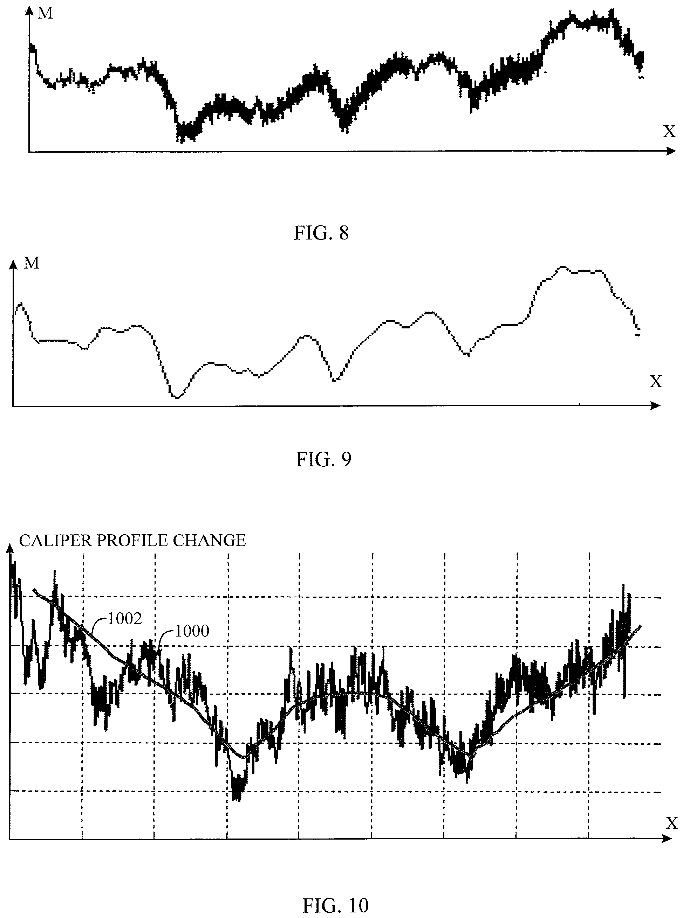

Figure 8 presents an example of a predicted future caliper change formed using the principle of equations (7) and (8) related to the future controlled variable $\Delta v$. In Figures 4 to 8, the vertical axis represents a magnitude M and the horizontal axis represents the location x in the cross direction.

Figure 9 presents an example of a manipulated variable used as control action for a caliper profiler. The control action follows the estimated future change of the controlled variable.

In an embodiment, calendar loads to the caliper profile may also be modeled using the feed-forward of the cross-direction control. A model which is a spatial model may be formed by tests with different loads and measuring the caliper profiles after each test load. Hence in general, a predetermined model may be based on temporally and/or spatially dependent disturbance associated with the actuator arrangement.

The operator may change, at his/her will, the calendar load and that can be considered as an external feed-forward command because the command goes through optimization before it is actually causing an effect in the process, and the MPC controller can take into account the command before it's effects are seen in the feedback.

A shape of calendar similar to the calendar of rolls 204 and 206 in Figure 2 may be changed by crowning and/or adding gas or oil pressure in at least one of the rolls 204, 206, for example.

A change in caliper profile can be measured for each possible command beforehand and the results may be used to form a model. Hence, the next (future) caliper profile $v_{j+1}^{p}$ may be written, for example, as: $v_{i,j+1}^{p} = v_{i,j}^{p} + \left( u_{i,j}^{p} - u_{i,j-1}^{p} \right) \cdot z_i$, where $u_{i,j}^{p} - u_{i,j-1}^{p}$ means a present change command of a manipulated variable (= nip load change) and $z_i$ is a coefficient in the model (Here, vector representation have not been used for simplicity). The future caliper profile can be used for optimization in the controller 104.

Figure 10 presents an example of a test where pressure in the middle of a calendar is added by 1.5 %. The vertical axis means profile change in an arbitrary scale and the horizontal axis means a place X along the calendar axis. The pressure addition changes the profile 1000 such the profile 1000 becomes thicker in both ends of the calendar. The reason may be a decrease of pressure. From the ends towards the center of the calendar the profile 1000 gets thinner probably due to the increased pressure. But in the mid area of the calendar the profile 1000 becomes thicker again. This is an unpredictable change because an increased pressure should make the profile thinner. Curve 1002 represents a model made of this test. The model may be made by filtering the measured profile 1000. The filtering may be a low pass, average or mean filtering, for example.

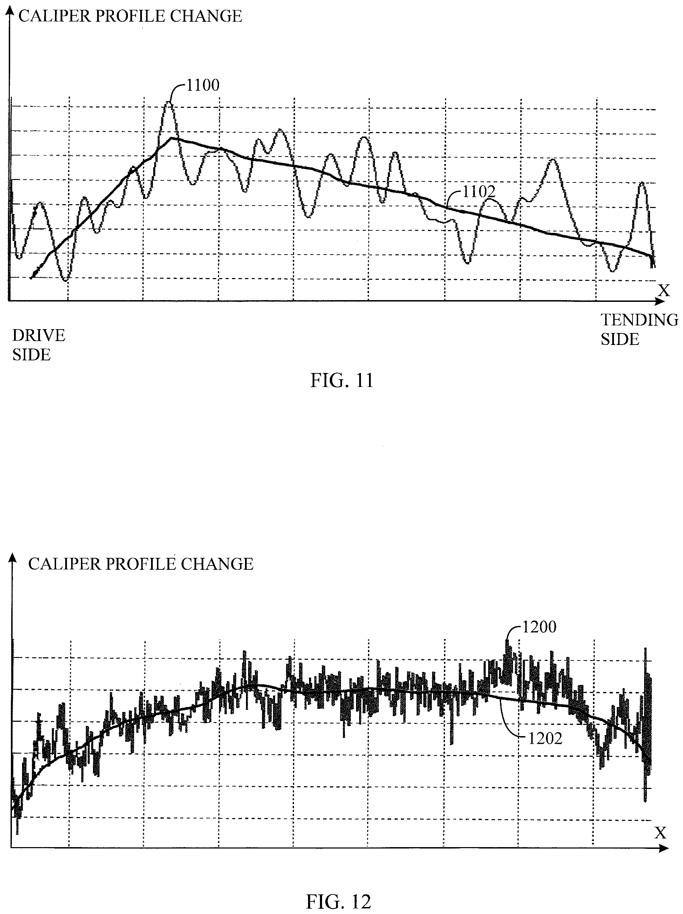

Figure 11 presents another example of test where pressure at tending side of the calendar is decreased by 1 kN/m. The caliper changes in this test such that the caliper 1100 becomes thinner at both ends of the calendar but the thickest caliper is more towards a drive side. A model curve 1102 may be formed by filtering the caliper curve 1100.

Figure 12 presents still another example of test where pressure is increased by 2 kN/m both at a drive side and at a tending side of the calendar. The caliper 1200 decreases at both ends and increases a little in the middle. A model curve 1202 may be formed by filtering the caliper curve 1200.

The model may compensate for general and/or individual differences of calendars. The differences may be deforms or other non-ideal shapes.

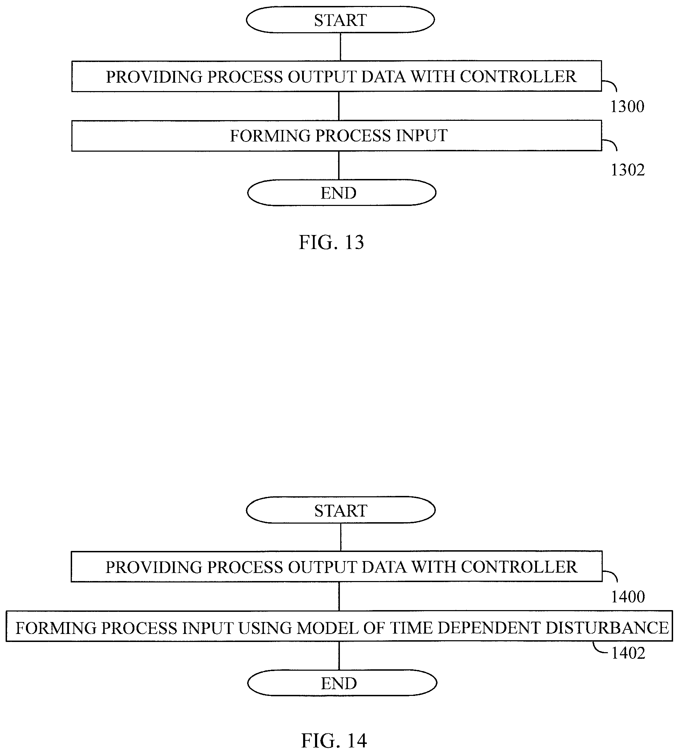

Figure 13 illustrates an example of a flow chart of the method. In step 1300, a measurement arrangement provides a controller with controlled variable data about at least one property of the sheet. In step 1302, the controller forms a manipulated variable for an actuator arrangement on the basis of a predetermined model based on time dependent disturbance in response to the disturbance.

Figure 14 illustrates an example of a flow chart of the method based on the model of the time dependent disturbance. In step 1400, a measurement arrangement provides a controller with controlled variable data about at least one property of the sheet. In step 1402, the controller forms a manipulated variable for an actuator arrangement regulating at least one property of the sheet on the basis of a predetermined model based on time dependent disturbance during a transient period of the manufacturing process in response to the disturbance.

In an embodiment, the device implementing aspects of the invention may be realized as software, or computer program or programs in a computer or computers of a processing system.

The computer programs may be in source code form, object code form, or in some intermediate form, and it may be stored in some sort of carrier, which may be any entity or device capable of carrying the program. Such carriers include a record medium, computer memory, read-only memory, and software distribution package, for example. Depending on the processing power needed, the computer program may be executed in a single electronic digital controller or it may be distributed amongst a number of controllers.

It will be obvious to a person skilled in the art that, as technology advances, the inventive concept can be implemented in various ways. The invention and its embodiments are not limited to the examples described above but may vary within the scope of the claims.

**Claims**

1. An apparatus, wherein the apparatus of a manufacturing process of a sheet comprises:

   a measurement arrangement, a controller with a feed forward controller part and an optimizing controller part and an actuator arrangement regulating at least one property of the sheet;
   the measurement arrangement being configured to provide the controller with controlled variable data about at least one property of the sheet;
   the controller having available a predetermined model of temporally or spatially dependent disturbance caused by the actuator arrangement to the manufacturing process of the sheet leading a controlled variable to drift out of steady state control;
   the feed forward controller part being configured to form data associated with at least one future controlled variable as a time dependent function of the model of a change in a manipulated variable associated with the disturbance; and
   the optimizing controller part being configured to form, using optimization, a manipulated variable for the actuator arrangement on the basis of the formed data associated with the at least one future controlled variable.

2. The apparatus of claim 1, wherein the controller being configured to form data associated with at least one future controlled variable as a time dependent function of a change in the measured manipulated variable, the time dependent function estimating the time dependent disturbance associated with the actuator arrangement in a transient period, and
   the controller being configured to form a manipulated variable for the actuator arrangement on the basis of the formed data about the at least one future controlled variable.

3. The apparatus of claim 1, wherein the controller being configured to form data of at least one change of the future controlled variable as the time dependent function of the change in the measured manipulated variable,
   the controller being configured to form the manipulated variable on the basis of the change of the at least one future controlled variable.

4. The apparatus of claim 1, wherein the model further being based on at least one of the following: the measured controlled variable data and the at least one manipulated variable formed by the controller during the transient phase.

5. The apparatus of claim 1, wherein apparatus comprising at least one caliper profiler of the sheet;
   the measurement arrangement being configured to provide the controller with data about caliper of the sheet;
   the controller having available the predetermined model based on the time dependent disturbance associated with the caliper profiler during a transient period; and
   the controller being configured to form the manipulated variable for the caliper profiler on the basis of the model.

6. The apparatus of claim 4, wherein the controller being configured to form data associated with at least one future caliper as a time dependent function of a change in the measured caliper, the time dependent function estimating the time dependent disturbance associated with the caliper profiler in a transient period, and form a control action for the caliper profiler on the basis of the data associated with the at least one future caliper.

7. The apparatus of claim 1, wherein the controller being configured to filter frequencies in conjunction of forming the manipulated variable.

**8.** The apparatus of claim 1, wherein the apparatus for controlling a process of sheet manufacturing comprises at least one processor; and

at least one memory including computer program code, the at least one memory with the at least one processor and the computer program code being configured to cause the apparatus at least to

form, using feed forward, data associated with at least one future controlled variable as a time dependent function of a model of a change in a manipulated variable associated with temporally or spatially dependent disturbance caused by an actuator arrangement to the manufacturing process of the sheet leading a controlled variable to drift out of steady state control; and

form, using optimization, a manipulated variable for the actuator arrangement regulating at least one property of the sheet on the basis of the formed data associated with the at least one future controlled variable.

**9.** The apparatus of claim 8, wherein the at least one memory with the at least one processor and the computer program code being configured to cause the processing unit to form a manipulated variable for the actuator arrangement on the basis of the predetermined model based on the time dependent disturbance during a transient period of the manufacturing process.

**10.** The apparatus of claim 8, wherein the at least one memory with the at least one processor and the computer program code being configured to cause the processing unit to estimate at least one future controlled variable or at least one future change of the controlled variable on the basis of the model of time dependent disturbance associated with the actuator arrangement.

**11.** The apparatus of claim 8, wherein the at least one memory with the at least one processor and the computer program code being configured to cause the processing unit to filter out high frequencies in conjunction of forming the manipulated variable.

**12.** A method in a manufacturing process of a sheet, comprising:

providing, by a measurement arrangement, a controller having a feed forward controller part and an optimizing controller part with a controlled variable data about at least one property of the sheet, the controller having available a predetermined model of temporally or spatially dependent disturbance caused by an actuator arrangement to the manufacturing process of the sheet leading a controlled variable to drift out of steady state control;

forming, by the feed forward controller part, data associated with at least one future controlled variable as a time dependent function of the model of a change in the measured manipulated variable associated with the disturbance caused by an actuator arrangement; and

forming, by the optimizing controller part using optimization, a manipulated variable for the actuator arrangement regulating at least one property of the sheet on the basis of the formed data associated with the at least one future controlled variable.

**13.** The method of claim 12, the method further comprising forming, by the controller, data associated with at least one future controlled variable as a time dependent function of a change in the measured manipulated variable, the time dependent function estimating the time dependent disturbance associated with the actuator arrangement in a transient period; and

forming, by the controller, a manipulated variable for the actuator arrangement on the basis of the formed data about the at least one future controlled variable.

**14.** The method of claim 12, the method further comprising filtering out high frequencies in conjunction of forming the manipulated variable.

**15.** A computer program distribution medium readable by a computer and encoding a computer program of instructions for executing a computer process carrying out the method according to any of claims 12 to 14.

**Patentansprüche**

**1.** Vorrichtung, wobei die Vorrichtung eines Herstellungsprozess einer Bahn umfasst:

eine Messanordnung, eine Steuerung mit einem Vorschubsteuerungsteil und einem Optimierungssteuerungsteil und einer Stellgliedanordnung, die wenigstens eine Eigenschaft der Bahn regelt;

wobei die Messanordnung so konfiguriert ist, um die Steuerung mit Regelgrößendaten über wenigstens eine Eigenschaft der Bahn zu versorgen;

wobei die Steuerung ein vorbestimmtes Modell einer zeitlich oder räumlich abhängigen Störung, die durch die Stellgliedanordnung für den Herstellungsprozess der Bahn verursacht wird, verfügbar hat, die eine Regelgröße dazu führt, um aus dem stabilen Steuerungszustand heraus abzuweichen;

wobei der Vorschubsteuerungsteil so konfiguriert ist, um Daten zu bilden, die wenigstens einer zukünftigen Regelgröße als eine zeitabhängige Funktion des Modells einer Änderung einer Stellgröße, die der Störung zugeordnet ist, zugeordnet sind; und

wobei der Optimierungssteuerungsteil konfiguriert ist, um unter Verwendung von Optimierung eine Stellgröße für die Stellgliedanordnung auf der Basis der gebildeten Daten, die der wenigstens einen zukünftigen Regelgröße zugeordnet sind, zu bilden.

2. Vorrichtung nach Anspruch 1, wobei die Steuerung konfiguriert ist, um Daten zu bilden, die wenigstens einer zukünftigen Regelgröße als eine zeitabhängige Funktion einer Änderung der gemessenen Stellgröße zugeordnet sind, wobei die zeitabhängige Funktion die zeitabhängige Störung, die der Stellgliedanordnung in einer Übergangsperiode zugeordnet ist, abschätzt und

wobei die Steuerung konfiguriert ist, um eine Stellgröße für die Stellgliedanordnung auf der Basis der gebildeten Daten über die wenigstens eine zukünftige Regelgröße zu bilden.

3. Vorrichtung nach Anspruch 1, wobei die Steuerung konfiguriert ist, um Daten von wenigstens einer Änderung der zukünftigen Regelgröße als die zeitabhängige Funktion der Änderung der gemessenen Stellgröße zu bilden, wobei die Steuerung konfiguriert ist, um die Stellgröße auf der Basis der Änderung der wenigstens einen zukünftigen Stellgröße zu bilden.

4. Vorrichtung nach Anspruch 1, wobei das Modell des Weiteren auf wenigstens einem der folgenden basiert: den gemessenen Regelgrößendaten und der wenigstens eine Stellgröße, die während der Übergangsphase von der Steuerung gebildet wird.

5. Vorrichtung nach Anspruch 1, wobei die Vorrichtung wenigstens einen Dickenprofilersteller der Bahn umfasst;

wobei die Messanordnung konfiguriert ist, um die Steuerung mit Daten über die Dicke der Bahn zu versorgen;

wobei die Steuerung, die das vorbestimmte Modell basierend auf der zeitabhängigen Störung, die mit dem Dickenprofilersteller verbunden ist, während einer Übergangsperiode zur Verfügung hat; und

wobei die Steuerung konfiguriert ist, um die Stellgröße für den Dickenprofilersteller auf der Basis des Modells zu bilden.

6. Vorrichtung nach Anspruch 4, wobei die Steuerung konfiguriert ist, um Daten zu bilden, die wenigstens einer zukünftigen Dicke als eine zeitabhängige Funktion einer Änderung der gemessenen Dicke zugeordnet sind, wobei die zeitabhängige Funktion die zeitabhängige Störung abschätzt, die dem Dickenprofilersteller in einer Übergangsperiode zugeordnet ist, und eine Steuerungsaktion für den Dickenprofilersteller auf der Basis der Daten, die mit der wenigstens einen zukünftigen Dicke verbunden sind, zu bilden.

7. Vorrichtung nach Anspruch 1, wobei die Steuerung konfiguriert ist, um Frequenzen in Verbindung mit dem Bilden der Stellgröße zu filtern.

8. Vorrichtung nach Anspruch 1, wobei die Vorrichtung zum Steuern eines Bahnherstellungsprozesses umfasst wenigstens einen Prozessor; und

wenigstens einen Speicher mit einem Computerprogrammcode, wobei der wenigstens eine Speicher mit dem wenigstens einen Prozessor und dem Computerprogrammcode so konfiguriert ist, um die Vorrichtung zu veranlassen, wenigstens

unter Verwendung des Vorschubs Daten zu bilden, die mit wenigstens einer zukünftigen Regelgröße als eine zeitabhängige Funktion eines Modells einer Änderung einer Stellgröße verknüpft sind, die mit einer zeitlich oder räumlich abhängigen Störung verbunden ist, die durch eine Stellgliedanordnung für den Bahnherstellungsprozess verursacht wird, die dazu führt, dass eine Regelgröße aus dem stabilen Steuerungszustand heraus abweicht; und

unter Verwendung einer Optimierung eine Stellgröße für die Stellgliedanordnung zu bilden, die wenigstens eine Eigenschaft der Bahn auf der Basis der gebildeten Daten, die der wenigstens einen zukünftigen Regelgröße zugeordnet sind, regeln.

9. Vorrichtung nach Anspruch 8, wobei der wenigstens eine Speicher mit dem wenigstens einen Prozessor und dem Computerprogrammcode konfiguriert ist, um die Verarbeitungseinheit zu veranlassen, eine Stellgröße für die Stellgliedanordnung auf der Basis des vorbestimmten Modells, basierend auf der zeitabhängigen Störung, während einer Übergangszeit des Herstellungsprozesses zu bilden.

10. Vorrichtung nach Anspruch 8, wobei der wenigstens eine Speicher mit dem wenigstens einen Prozessor und dem Computerprogrammcode so konfiguriert ist, um die Verarbeitungseinheit zu veranlassen, wenigstens eine zukünftige Regelgröße oder wenigstens eine zukünftige Änderung der Regelgröße auf der Basis des Modells der zeitabhängigen Störung, die der Stellgliedanordnung zugeordnet ist, abzuschätzen.

11. Vorrichtung nach Anspruch 8, wobei der wenigstens eine Speicher mit dem wenigstens einen Prozessor und dem Computerprogrammcode konfiguriert ist, um die Verarbeitungseinheit zu veranlassen, die hohen Frequenzen in Verbindung mit dem Bilden der Stellgröße herauszufiltern.

12. Verfahren in einem Herstellungsprozess einer Bahn, umfassend:

das Versorgen einer Steuerung, die einen Vorschubsteuerungsteil und einen Optimierungssteuerungsteil aufweist, mittels einer Messanordnung mit Daten einer Regelgröße über wenigstens eine Eigenschaft der Bahn, wobei die Steuerung über ein vorbestimmtes Modell einer zeitlich oder räumlich abhängigen Störung, die durch eine Stellgliedanordnung verursacht wird, für den Herstellungsprozess der Bahn verfügt, was dazu führt, dass eine Regelgröße aus dem stabilen Steuerungszustand heraus abweicht;
das Bilden von Daten, die wenigstens einer zukünftigen Regelgröße als eine zeitabhängige Funktion des Modells einer Änderung der gemessenen Stellgröße zugeordnet sind, die der durch eine Stellgliedanordnung verursachten Störung zugeordnet ist, durch den Vorschubsteuerungsteil; und
das Bilden einer Stellgröße für die Stellgliedanordnung durch den Optimierungssteuerungsteil mittels Optimierung, wobei die Stellgröße wenigstens eine Eigenschaft der Bahn auf Basis der gebildeten Daten, die der wenigstens einen zukünftigen Regelgröße zugeordnet sind, regelt.

13. Verfahren nach Anspruch 12, wobei das Verfahren des Weiteren umfasst

das Bilden von Daten, die mit wenigstens einer zukünftigen Regelgröße als eine zeitabhängige Funktion einer Änderung der gemessenen Stellgröße verknüpft sind, durch die Steuerung, wobei die zeitabhängige Funktion die zeitabhängige Störung abschätzt, die der Stellgliedanordnung in einer Übergangsperiode zugeordnet ist; und
das Bilden einer Stellgröße für die Stellgliedanordnung durch die Steuerung auf der Basis der gebildeten Daten über die wenigstens eine zukünftige Regelgröße.

14. Verfahren nach Anspruch 12, wobei das Verfahren des Weiteren das Herausfiltern hoher Frequenzen in Verbindung mit dem Bilden der Stellgröße umfasst.

15. Computerprogrammverteilungsmedium, das von einem Computer lesbar ist, und Kodierung eines Computerprogramms von Anweisungen zum Ausführen eines Computerprozesses, der das Verfahren nach einem der Ansprüche 12 bis 14 ausführt.


**Revendications**

1. Appareil, dans lequel l'appareil d'un processus de fabrication d'une feuille comprend :

un agencement de mesure, une unité de commande avec une partie unité de commande à action directe et une partie unité de commande d'optimisation et un agencement de dispositif d'actionnement régulant au moins une propriété de la feuille ;
l'agencement de mesure étant configuré pour fournir à l'unité de commande des données de grandeurs réglées concernant au moins une propriété de la feuille ;
l'unité de commande ayant disponible un modèle prédéterminé de perturbation dépendante dans le temps ou dans l'espace provoquée par l'agencement de dispositif d'actionnement pour le processus de fabrication de la feuille conduisant à la dérive d'une grandeur réglée hors de la commande à l'état stable ;
la partie unité de commande à action directe étant configurée pour former des données associées à au moins une grandeur réglée future en tant que fonction dépendant du temps du modèle d'un changement d'une grandeur réglante associée à la perturbation ; et

la partie unité de commande d'optimisation étant configurée pour former, en utilisant une optimisation, une variable réglante pour l'agencement de dispositif d'actionnement sur la base des données formées associées à l'au moins une grandeur réglée future.

2. Appareil selon la revendication 1, dans lequel, l'unité de commande est configurée pour former des données associées à au moins une grandeur réglée future en tant que fonction dépendante du temps d'un changement de la variable réglante mesurée, la fonction dépendant du temps évaluant la perturbation dépendante du temps associée à l'agencement de dispositif d'actionnement dans une période transitoire, et
l'unité de commande est configurée pour former une variable réglante pour l'agencement de dispositif d'actionnement sur la base des données formées concernant l'au moins une grandeur réglée future.

3. Appareil selon la revendication 1, dans lequel, l'unité de commande est configurée pour former des données d'au moins un changement de la grandeur réglée future en tant que fonction dépendante du temps du changement de la variable réglante mesurée,
l'unité de commande est configurée pour former la variable réglante sur la base du changement de l'au moins une grandeur réglée future.

4. Appareil selon la revendication 1, dans lequel le modèle est en outre basé sur au moins une des choses suivantes : les données de grandeurs réglées mesurées et l'au moins une variable réglante formée par l'unité de commande pendant la phase transitoire.

5. Appareil selon la revendication 1, dans lequel l'appareil comprend au moins un profileur d'épaisseur du papier de la feuille ;
l'agencement de mesure est configuré pour fournir à l'unité de commande des données concernant l'épaisseur du papier de la feuille ;
l'unité de commande a disponible le modèle prédéterminé sur la base de la perturbation dépendante du temps associée au profileur d'épaisseur du papier pendant une période transitoire ; et
l'unité de commande est configurée pour former la variable réglante pour le profileur d'épaisseur du papier sur la base du modèle.

6. Appareil selon la revendication 4, dans lequel l'unité de commande est configurée pour former des données associées à au moins une épaisseur du papier future en tant que fonction dépendante du temps d'un changement de l'épaisseur du papier mesurée, la fonction dépendante du temps évaluant la perturbation dépendante du temps associée au profileur d'épaisseur du papier dans une période transitoire, et pour former une action de commande pour le profileur d'épaisseur du papier sur la base des données associées à l'au moins une épaisseur du papier future.

7. Appareil selon la revendication 1, dans lequel l'unité de commande est configurée pour filtrer des fréquences en relation à la formation de la variable réglante.

8. Appareil selon la revendication 1, dans lequel l'appareil pour commander un processus de fabrication de feuille comprend
au moins un processeur ; et
au moins une mémoire incluant un code de programme informatique, l'au moins une mémoire avec l'au moins un processeur et le code de programme informatique sont configurés pour amener l'appareil au moins :

à former, en utilisant une action directe, des données associées à au moins une grandeur réglée future en tant que fonction dépendante du temps d'un modèle d'un changement d'une variable réglante associée à une perturbation dépendante dans le temps ou dans l'espace provoquée par un agencement de dispositif d'actionnement au processus de fabrication de la feuille conduisant à la dérive d'une grandeur réglée hors de la commande à l'état stable ; et
à former, en utilisant une optimisation, une variable réglante pour l'agencement de dispositif d'actionnement régulant au moins une propriété de la feuille sur la base des données formées associées à l'au moins une grandeur réglée future.

9. Appareil selon la revendication 8, dans lequel l'au moins une mémoire avec l'au moins un processeur et le code de programme informatique sont configurés pour amener l'unité de traitement à former une variable réglante pour l'agencement de dispositif d'actionnement sur la base du modèle prédéterminé en se basant sur la perturbation dépendante du temps pendant une période transitoire du processus de fabrication.

**10.** Appareil selon la revendication 8, dans lequel l'au moins une mémoire avec l'au moins un processeur et le code de programme informatique sont configurés pour amener l'unité de traitement à évaluer au moins une grandeur réglée future ou au moins un changement futur de la grandeur réglée sur la base du modèle de perturbation dépendante du temps associée à l'agencement de dispositif d'actionnement.

**11.** Appareil selon la revendication 8, dans lequel l'au moins une mémoire avec l'au moins un processeur et le code de programme informatique sont configurés pour amener l'unité de traitement à filtrer des fréquences élevées en relation à la formation de la variable réglante.

**12.** Procédé dans un processus de fabrication d'une feuille, comprenant :

la fourniture, par un agencement de mesure, d'une unité de commande ayant une partie unité de commande à action directe et une partie unité de commande d'optimisation avec des données de grandeurs réglées concernant au moins une propriété de la feuille, l'unité de commande ayant disponible un modèle prédéterminé de perturbation dépendante dans le temps ou dans l'espace provoquée par un agencement de dispositif d'actionnement au processus de fabrication de la feuille conduisant à la dérive d'une grandeur réglée hors de la commande à l'état stable ;
la formation, par la partie unité de commande à action directe, de données associées à au moins une grandeur réglée future en tant que fonction dépendante du temps du modèle d'un changement de la variable réglante mesurée associée à la perturbation provoquée par un agencement de dispositif d'actionnement ; et
la formation, par la partie unité de commande d'optimisation en utilisant une optimisation, d'une variable réglante pour l'agencement de dispositif d'actionnement régulant au moins une propriété de la feuille sur la base des données formées associées à l'au moins une grandeur réglée future.

**13.** Procédé selon la revendication 12, le procédé comprenant en outre la formation, par l'unité de commande, de données associées à au moins une grandeur réglée future en tant que fonction dépendante du temps d'un changement de la variable réglante mesurée, la fonction dépendante du temps évaluant la perturbation dépendante du temps associée à l'agencement de dispositif d'actionnement dans une période transitoire ; et
la formation, par l'unité de commande, d'une variable réglante pour l'agencement de dispositif d'actionnement sur la base des données formées concernant l'au moins une grandeur réglée future.

**14.** Procédé selon la revendication 12, le procédé comprenant en outre le filtrage de fréquences élevées en relation à la formation de la variable réglante.

**15.** Support de distribution de programme informatique lisible par un ordinateur et codant un programme informatique d'instructions pour exécuter un processus informatique effectuant le procédé selon l'une quelconque des revendications 12 à 14.

FIG. 1

FIG. 2

FIG. 3A

FIG. 3B

FIG. 4

M

X

FIG. 5

M

X

FIG. 6

M

X

FIG. 7

FIG. 8

FIG. 9

FIG. 10

FIG. 11

FIG. 12

START

PROVIDING PROCESS OUTPUT DATA WITH CONTROLLER ⌐ 1300

FORMING PROCESS INPUT ⌐ 1302

END

FIG. 13

START

PROVIDING PROCESS OUTPUT DATA WITH CONTROLLER ⌐ 1400

FORMING PROCESS INPUT USING MODEL OF TIME DEPENDENT DISTURBANCE ⌐ 1402

END

FIG. 14

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010043993 A

- US 2004260421 A

**Non-patent literature cited in the description**

- **JING LI.** a thesis submitted in partial fulfillment of the requirements for the degree of master of applied science. *Adaptive Control of Sheet Caliper on Paper Machines,* 01 December 1994